Europäisches Patentamt

(19) European Patent Office

Office européen des brevets

(11) Publication number: **0 037 270**

**A1**

(12) # EUROPEAN PATENT APPLICATION

(21) Application number: **81301346.3**

(22) Date of filing: **27.03.81**

(51) Int. Cl.³: **G 09 B 19/08**
**G 09 F 19/14, G 09 B 3/04**

(30) Priority: **27.03.80 GB 8010309**

(43) Date of publication of application:
**07.10.81 Bulletin 81/40**

(84) Designated Contracting States:
**AT BE CH DE FR GB IT LI LU NL SE**

(71) Applicant: **Marylebone Investment Corporation**
**Avenue J. Arosemena y Calle 32, Edificio**
**Vallarino, 3 Er Piso, Panama 5(PA)**

(72) Inventor: **Flower, Desmond John Newman**
**187, Clarence Gate Gardens**
**London NW1 6AR(GB)**

(72) Inventor: **Brooking, Timothy John**
**Pilbeams**
**Nutley Sussex(GB)**

(74) Representative: **Dixon, Donald Cossar et al,**
**Gee & Co. Chancery House Chancery Lane**
**London WC2 1QU(GB)**

(54) Language translation device.

(57) A language-translation device to facilitate communication between two persons, comprises at least one and preferably a set of sheets (10, 31) carrying phrases in two languages on changing-image bands (18) so that, when the sheet is appropriately tilted, one and then the other language are displayed to the persons using the device. A cursor device (16) comprising a scanning cursor (19) with a clear gap (21) to identify a particular band (18), and a moving-arrow cursor (20, 23) mounted on the scanning cursor to identify a particular part of the band, is movable by one of the persons to identify a particular phrase.

The sheets may be contained in a pocket (12) of a wallet (11), and be each provided with a projecting tab (17) which facilitates withdrawal and identifies the contents of the sheet.

The bands (18) may be of different colours to facilitate identification, and the sheets may have integral changing-image lenses or a common lens (30).

Croydon Printing Company Ltd.

# FIG.3

AT THE CHEMISTS SHOP

| YES | PLEASE REPEAT / WRITE DOWN | NO |
|---|---|---|

Please can you sell me a remedy for...?

| | |
|---|---|
| skin irritation | sunburn |
| sore throat | cough |
| constipation / stomach upset / | diarrhoea |
| common cold / hay fever / | indigestion |
| mosquito / | insect bites |
| sore eyes / | ear ache |
| toothache / | sleeplessness |
| muscular aches / | pains |

Where may I get this ?

I need some anti-biol. tablets/medicine ⎯ 19

Tomorrow / at (indicate) hour ⎯ 21

How much will this prescription cost

Please can you sell me some ...?

| | | |
|---|---|---|
| iodine / | antiseptic lotion | |
| plasters / bandages / | gauze | |
| cotton wool / | contraceptives | |
| tissues / | sanitary towels | |
| insect repellant | | |
| a first aid kit / | pair of sunglasses | |
| suntan oil / | cream | |

How much does this/do these cost ?
Please write down my total bill

Thank you for your help ... Good-day

## LANGUAGE TRANSLATION DEVICE

This invention relates to so-called changing-image sheets which can be used for language translation.

It has frequently been found that 'useful' phrase-books can be anything but useful, particularly in stress situations when a foreigner in a country where he or she does not speak the language can be at an embarrassing and sometimes expensive disadvantage. For example, foreigners may have difficulty in stating their needs not only in shops, hotels and airports, but also in hospitals and to service staff such as taxi drivers and money exchangers.

It is an object of the present invention to provide a language-translation device which will ease communication problems between persons not speaking one another's language, by providing a simple means of carrying on a possibly elementary but nevertheless accurate dialogue which is particularly important in a specific stress situation such as a road accident or in illness. Another object of the present invention is to provide a language-translation device for use by a hotel, store or the like and which can offer a simple translation format to facilitate communication with visiting foreigners speaking only their native languages.

According to the present invention there is provided a language-translation device to facilitate communication between two persons, the device comprising at least one sheet which carries on bands across a face of the sheet a series of phrases printed in two languages superimposed, changing-image lens means associated with the printed face of the sheet so that, when the lens means with the sheet are appropriately tilted, one and then the other language are displayed to the persons using the device, and means such as a cursor device movable by one of the persons to identify the particular phrase whose meaning is to be conveyed to the other person.

Changing-image sheets or cards are, of course, well known in, for example, children's cartoons where apparent movement of the characters in the cartoon can be produced by tilting the card so that alternative images are visible to the child.

The changing-image lens means may be integral with the printed face of the or each sheet, or may comprise a transparent lens plate separate from the sheet(s).

The identifying means may comprise a scanning cursor with a clear gap to identify a particular band, and a moving-arrow cursor mounted on the scanning cursor to identify a particular part of the band.

Preferably, a set of sheets of standard postcard size are provided, with both faces carrying a series of phrases. Preferably also, the sheets are each provided with a projecting tab which facilitates selective withdrawal of the sheets from a containing wallet, and the tabs are marked to identify the contents of individual sheets.

The device according to the invention has two principal areas of use; firstly, for providing a set of, say, English/Spanish sheets for use by English tourists in a series of situations such as in hotels, in shops, and for medical use in Spain and, secondly, for providing a set of sheets in various languages such as English/Spanish, English/French and English/German, for use in an English store, hotel or airport with an international clientele.

Embodiments of the present invention will now be described, by way of example, with reference to the accompanying drawings in which:-

Figure 1 shows a first form of language-translation device or kit for use by tourists and comprising a set of sheets which carry phrases in two languages and which are contained in a wallet;

Figure 2 is a plan view corresponding to Figure 1;

Figure 3 is a front view of the face of a withdrawn sheet on which a cursor device has been positioned, and showing the phrases in one of the languages;

Figure 4 is a view corresponding to Figure 3 but showing some of the phrases in the other language;

Figure 5 is a detail plan view of the cursor device shown in Figures 2 and 3;

Figure 6 is a front view of the printed face of one of the sheets of another form of translation device according to the invention;

Figure 7 is a detail view of part VII shown in Figure 6; and

Figure 8 is an enlarged detail section through the lens plate of the second form of translation device.

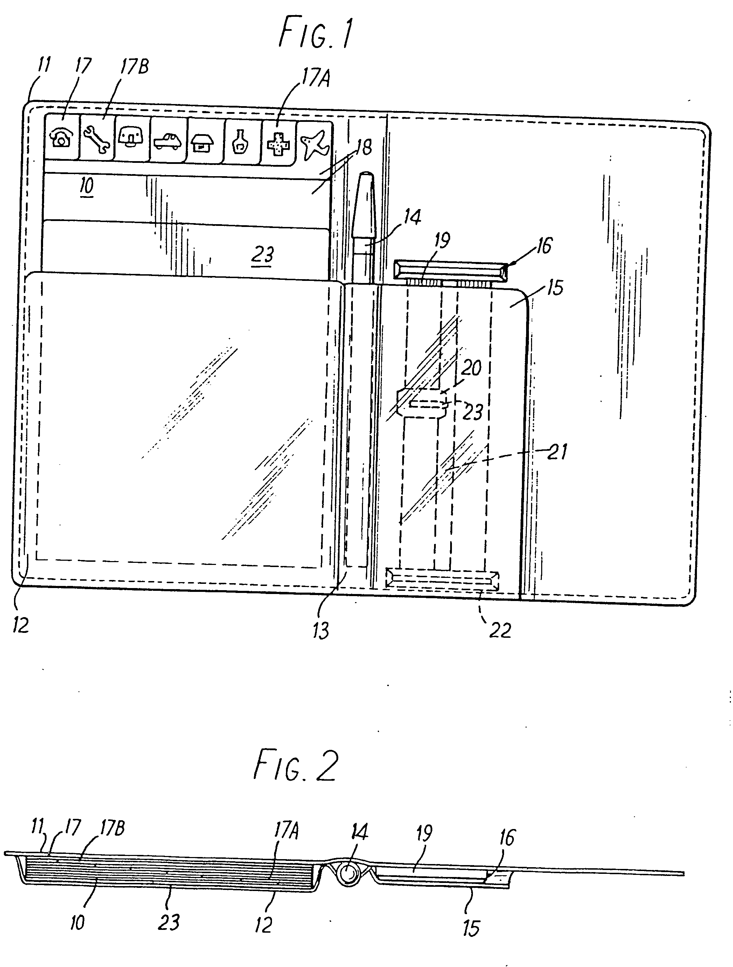

Referring to Figures 1 and 2 of the drawings, the language translation kit comprises a set of eight sheets or cards 10 of standard postcard size contained in a foldable wallet 11 which is formed with a pocket 12 to carry the cards, a pocket 13 to carry a pen 14, and a pocket 15 to carry a cursor device 16. Each sheet or card 10 is provided with an upwardly-projecting tab 17 which carries a symbol such as a coloured cross 17A to indicate the (medical/pharmaceutical) nature of the contents of the card, or a spanner 17B to indicate that the card relates to mechanical matter concerning motor cars.

In the present embodiment of the invention, each card 10 has only one operative face. This face is half-line printed with phrases in two languages superimposed, and carries an integral changing-image lens of generally known form. Such a lens is provided by a layer of plastics material which is formed with small parallel ridges in register with the print lines to provide a changing-image effect. As shown in Figure 2, the face of the card is provided with a series of phrases on horizontal bands 18. The bands may be alternately coloured to facilitate individual identification and, in this embodiment, consist of two yellow bands 18A, four white bands 18B, two green bands 18C, and one red band 18D, plus a bottom band 18E which is printed with for example the manufacturer's name and need not be of changing-image form. Alternatively, the bands may be black and white, alternately, or other colours and may be of similar sizes.

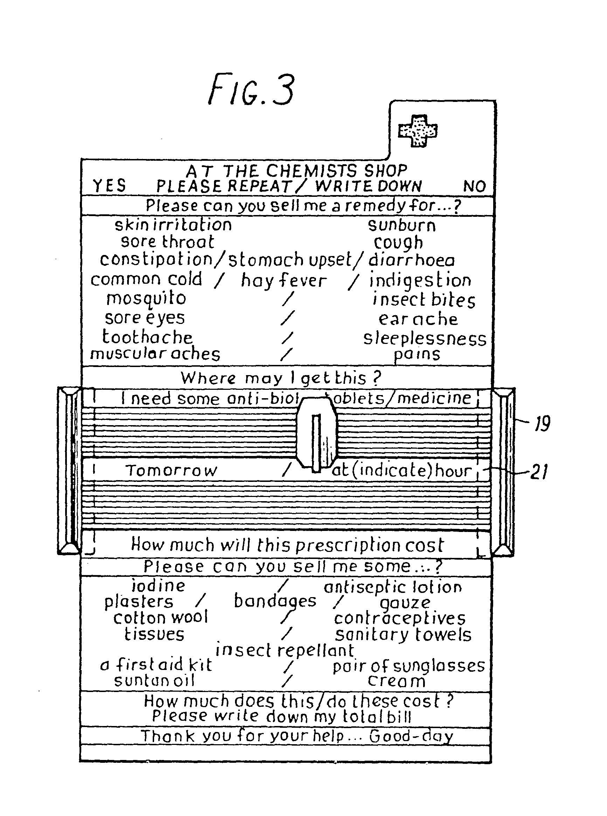

The card shown in Figures 2 and 3 is the one of the set which carries medical/pharmaceutical subject-matter and, in this embodiment, the cards are all printed with phrases in English/Spanish; Figure 2 shows the phrases in English, and Figure 3 shows some of the Spanish equivalents which appear when the card is tilted through about 20 degrees.

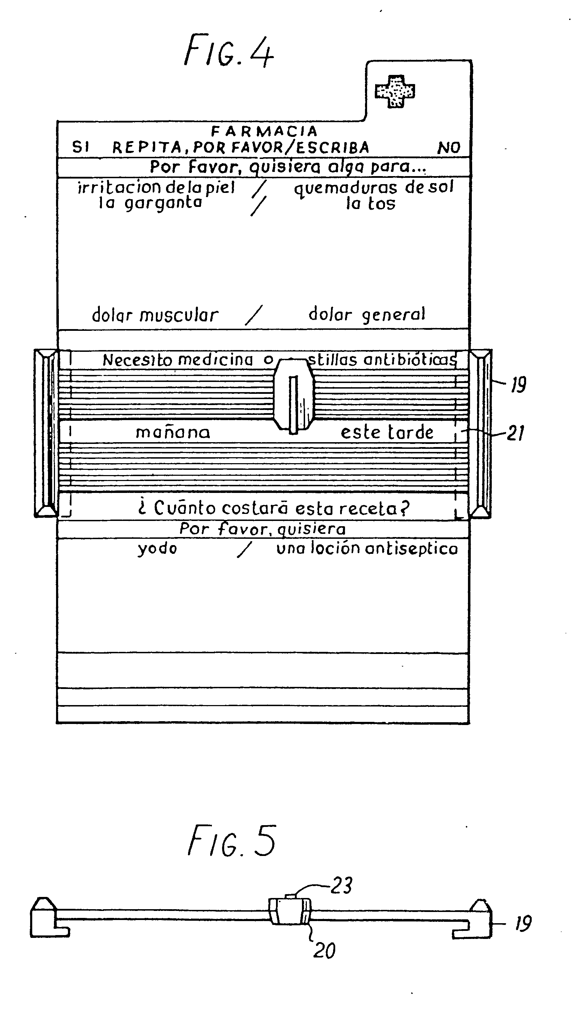

The cursor device 16, which is also shown in Figure 4 comprises a scanner 19 and a pointer 20. The scanner 19 is formed from opaque plastics material with a clear central gap 21, and has end parts 22 which grip but are slidable along the edges of the chosen card 10. The pointer 20 is formed with an arrow 23 and grips but is slidable along the scanner 19.

In use when, for example, the English user of the device visits a chemist or drug-store in Spain and wishes to communicate with the assistant, he withdraws the medical card and positions the scanner 19 to indicate through the gap 21 the first phrase which he wishes to convey to the Spanish-speaking recipient. He then shows or hands the card, with the scanner in position, to that person who, on appropriately tilting the card through about 20 degrees, reads the Spanish translation of the phrase "Please can you sell me some ...". The English user then moves the scanner to a lower line, and slides the pointer 20 to the second phrase, e.g. "bandages", which can then be read in Spanish by the assistant who will point to or move the pointer to "SI" or "NO". A purchase can then be made and the assistant will write down the total bill as requested by means of the translation card. The kit provides a water-based felt-tip pen (13) and also a white plastics card 23 for this purpose.

It will be appreciated that in phrase lines such as "Where may I get this" the pointer 20 will not be required and, for sets of cards which are all printed with single complete lines, the pointer may be omitted from the kit.

The reverse face of the cards may also be printed with additional information on the "front-face" subject, or with information relating to a further subject such as travel or shopping.

For tourists, sets of cards may be provided in languages such as English/Spanish, English/French or English/German, and the languages may be colour-coded; for example, English/Spanish may be green/blue with the cards and the wallet printed in these colours.

- 6 -

In another application of the invention, a similar set of cards is provided for use in, for example, a hotel with an international clientele. In this case, each card of the set would carry the same phrases, but the phrases would be written in different languages in each card. For example, in use in an English hotel the set of cards would be in English/French, English/German, English/Spanish, etc. The front and rear faces of each card may carry the same series of phrases, but in different languages, or they may carry two columns of phrases in the same language. Again, the cards may be colour-coded to indicate the languages and the contents may also be identified by having the flags of the respective foreign countries printed on the tabs (17).

Modifications may be made without departing from the scope of the invention. For example, it is convenient for the purpose of manufacture to employ cards having the dimensions of a standard postcard and, for this size, it has proved best to use six or eight cards in a pocket, but the dimensions of the cards and the number in the set may be altered. Furthermore, the cursor device (16) may be replaced by an alternative form of indicator, or an indicator may be incorporated in the upper part of the wallet.

Advertising or informative material may be printed on the wallet (11) or, in more simple kits where a wallet is not provided, such material could be printed on the back faces of the cards or on an additional, possibly changing-image, card.

In a simplified embodiment of the invention, only a single, possibly double-faced, card is provided, in which case a wallet such as 11 would not usually be necessary.

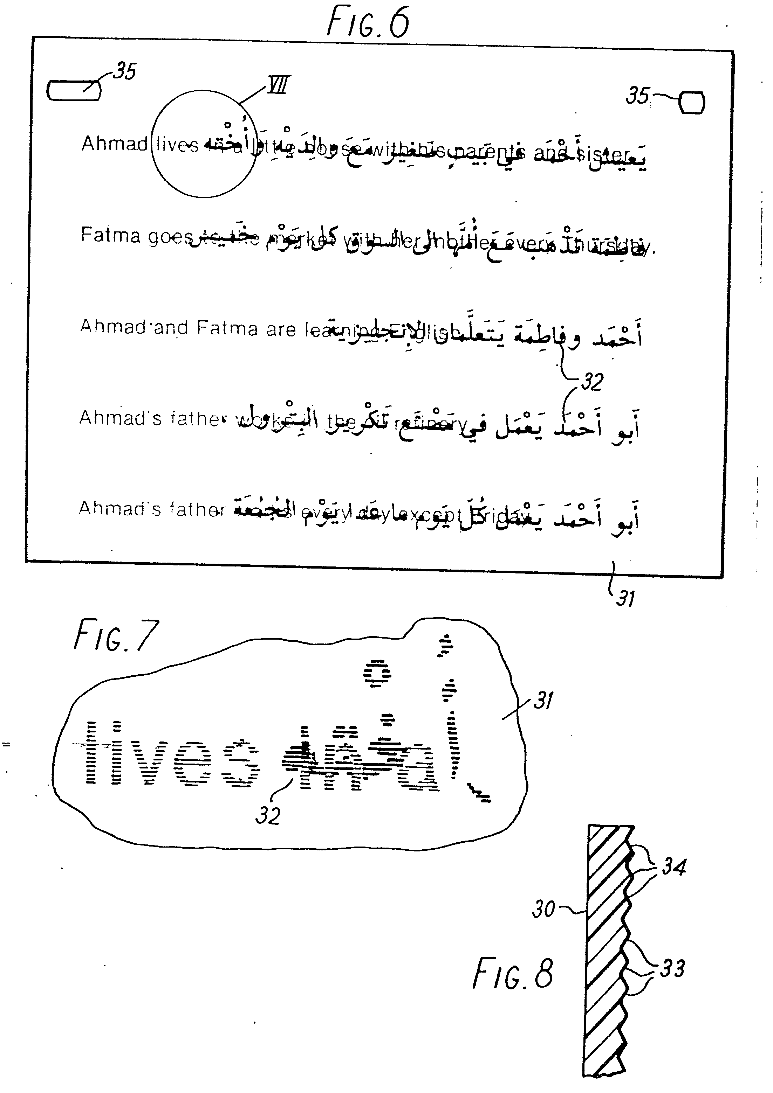

In the embodiments of the present invention so far described, an individual changing-image lens extends over most of the printed face of each card, in accurate register with the printing on the base sheet and, for small quantities, the production costs can be quite appreciable. To minimise such costs, and particularly for kits which provide a substantial number of sheets, a common lens may be provided as will now be described with reference to Figures 6 to 8. In this arrangement, the kit has a changing-image lens 30 for use with a set of sheets 31 which, as indicated in Figure 6, carry only printed matter 32 in the form of phrases in English and Arabic. The phrases are half-line printed superimposed, and the sheets are arranged to be selectively fitted behind the lens. It is, of course, important to have the half-line print in accurate register with the angled faces 33/34 of the lens 30, and the planar rear face of the lens may be formed with locating parts to be engaged by, for example, a finished edge or complementary locating parts such as openings 35 provided on each sheet 31.

CLAIMS

1. A language-translation device to facilitate communication between two persons, the device comprising at least one sheet (10,31) which carries on bands (18) across a face of the sheet a series of phrases printed in two languages superimposed, changing-image lens means associated with the printed face of the sheet so that, when the lens means with the sheet are appropriately tilted, one and then the other language are displayed to the persons using the device, and means such as a cursor device (16) movable by one of the persons to identify the particular phrase whose meaning is to be conveyed to the other person.

2. A language-translation device according to Claim 1, in which said lens means are formed integrally with the or each printed face of the or each sheet (10).

3. A language-translation device according to Claim 1, in which said lens means comprise a transparent plate (30) separate from said sheet or sheets.

4. A language-translation device according to Claim, in which the identifying means comprise a scanning cursor (19) with a clear gap (21) to identify a particular band (18), and a moving-arrow cursor (20,23) mounted on the scanning cursor to identify a particular part of the band.

5. A language-translation device according to any preceding Claim, in which said bands (18) are of different colours to facilitate identification.

6.     A language-translation device according to
any preceding Claim, in which both faces of the or each
sheet (10, 31) carry a series of phrases.

7.     A language-translation device according to
any preceding Claim, in which said sheet (10) is one
of a set of sheets.

8.     A language-translation device according to
Claim 7, in which each sheet (10) is of standard
postcard size.

9.     A language-translation device according to
Claim 7 or Claim  8, in which the sheets are each
provided with a projecting tab (17) which facilitates
selective withdrawal of the sheets from a container (12),
and the tabs are marked to identify the contents of the
individual sheets.

10.     A language-translation kit comprising a wallet (11)
having a pocket (12), a set of sheets (10) as claimed in
any of Claims 7 to 9 contained in said pocket (12),
and identifying means such as a cursor (16) as claimed in
any preceding Claim.

11.     A language-translation kit according to Claim 10,
in which said wallet has a second pocket (15) to receive
said cursor device.

12.     A language-translation kit according to Claim 10
or Claim 11 and further comprising a blank card (23) and
an instrument (14) for writing on the blank card.

FIG.1

FIG.2

## FIG. 3

### AT THE CHEMISTS SHOP
YES    PLEASE REPEAT / WRITE DOWN     NO

Please can you sell me a remedy for...?

| | |
|---|---|
| skin irritation | sunburn |
| sore throat | cough |
| constipation / stomach upset / diarrhoea | |
| common cold / hay fever / indigestion | |
| mosquito / insect bites | |
| sore eyes / earache | |
| toothache / sleeplessness | |
| muscular aches / pains | |

Where may I get this?

I need some anti-biol—toblets / medicine

Tomorrow / at (indicate) hour — 19

— 21

How much will this prescription cost

Please can you sell me some...?

| | |
|---|---|
| iodine / antiseptic lotion | |
| plasters / bandages / gauze | |
| cotton wool / contraceptives | |
| tissues / sanitary towels | |
| insect repellant | |
| a first aid kit / pair of sunglasses | |
| suntan oil / cream | |

How much does this / do these cost?
Please write down my total bill

Thank you for your help... Good-day

## FIG.4

**FARMACIA**

SI    REPITA, POR FAVOR/ESCRIBA                NO

Por favor, quisiera alga para...

irritacion de la piel    /    quemaduras de sol
la garganta              /              la tos

dolar muscular      /      dolar general

Necesito medicina o pastillas antibióticas — 19

mañana                    este tarde — 21

¿ Cuánto costará esta receta?

Por favor, quisiera
yodo         /      una loción antiseptica

## FIG.5

23

19

20

FIG.6

Ahmad lives أُخْته with his parents and sister.

Fatma goes every Thursday.

Ahmad and Fatma are learning English.

Ahmad's father work in the refinery البِترول.

Ahmad's father every day except Friday.

FIG.7

lives أخي

FIG.8

**European Patent Office**

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| | <u>US - A - 3 225 457</u> (A. SCHURE) <br>   * Figures 1-12; column 2, line 61 - column 6, line 46 * | 1,3 |
| | <u>FR - A - 2 397 695</u> (ROSENTHAL) <br>   * Figures 1-8; page 7, line 1 - page 13, line 36 * | 1-3 |
| | <u>US - A - 3 538 632</u> (K. ANDERSON) <br>   * Figures 1,2; column 3, line 10 - column 4, line 8 * | 1,3 |

---

CLASSIFICATION OF THE APPLICATION (Int. Cl.³)

G 09 B 19/08
G 09 F 19/14
G 09 B 3/04

TECHNICAL FIELDS SEARCHED (Int. Cl.³)

G 09 B 19/08
G 09 F 19/14
G 09 B 3/04

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 25-06-1981 | CARDON |

EPO Form 1503.1  06.78